# EUROPÄISCHE PATENTSCHRIFT

(11) **EP 1 050 437 B1**
(45) Veröffentlichungstag und Bekanntmachung des Hinweises auf die Patenterteilung: **30.03.2005**
(21) Anmeldenummer: 00108937.4
(22) Anmeldetag: 27.04.2000
(51) Int. Cl.: B60R 16/02, B62D 5/04, B62D 15/02

(54) **Lenkeinrichtung für ein Kraftfahrzeug**
Steering apparatus for an automotive vehicle
Direction pour un véhicule automobile

(30) Priorität: 03.05.1999 DE 19920092
(43) Veröffentlichungstag der Anmeldung: 08.11.2000
(73) Patentinhaber: Leopold Kostal GmbH & Co. KG, 58507 Lüdenscheid (DE)
(72) Erfinder: Mindl, Anton, Dr., 58515 Lüdenscheid (DE); Kerkmann, Detlef, Dr., 58769 Nachrodt (DE); Bläsing, Frank, 59457 Werl (DE); Nieding, Klaus, 58553 Halver (DE)

(56) Entgegenhaltungen:
- EP-A- 0 447 626
- DE-A- 19 822 170
- US-A- 4 514 645
- US-A- 5 394 760
- US-A- 5 621 179

## Beschreibung

Die Erfindung bezieht sich auf eine Lenkeinrichtung für ein Kraftfahrzeug mit einem einen drehfest mit dem Fahrzeug verbundenen Stator und einen drehfest mit dem Lenkrad verbundenen Rotor aufweisenden induktiven Modul zur berührungslosen Übertragung von elektrischer Energie und Daten zwischen Fahrzeug und Lenkrad, zur Erfassung des Drehwinkels des Lenkrades sowie zur Erzeugung von Drehmomenten zwischen Fahrzeug und Lenkrad.

Durch die DE 197 36 346 C1 ist eine Vorrichtung zur Übertragung von elektrischer Energie zwischen der Fahrzeugseite und der Lenkradseite eines Fahrzeugs bekannt geworden, bei der ein resolverbasierter Drehübertrager zum Einsatz kommt. Wie insbesondere aus dem zugeordneten Verfahren ersichtlich ist, ist mit dieser Vorrichtung gleichzeitig auch die Ermittlung des Lenkraddrehwinkels sowie die Übertragung von Daten zwischen Lenkrad- und Fahrzeugseite möglich.
Nicht offenbart ist in dieser Druckschrift jedoch die Möglichkeit eine derartige Vorrichtung auch zur Erzeugung von Drehmomenten zwischen Lenkrad und Fahrzeug einzusetzen.

Die Erzeugung solcher Drehmomente ist z.B. bei konventionellen Fahrzeuglenkungen zur Unterstützung der vom Fahrzeugführer aufgebrachten Lenkkräfte oder bei sog. "steer-by-wire"-Lenkvorrichtungen zur Erzeugung von Gegenlenkmomenten zur Realisierung einer haptischen Rückmeldung für den Fahrzeugführer bekannt.
So offenbart beispielsweise die DE 198 22 170 A1 eine Servolenkvorrichtung zur Erzeugung einer Lenkunterstützung in Reaktion auf ein Lenksteuersignal, bei der elektromotorische Mittel zur Erzeugung der Unterstützungskräfte eingesetzt sind, wobei jedoch durch einen im Bereich des Lenkgetriebes angeordneten Elektromotor eine dezentrale Anordnung der Komponenten zwingend vorgegeben ist.
Aus der EP 04 47 626 B1 ist andererseits ein Aktuator für eine kybernetische Lenkung bekannt, bei dem axial zu einer Lenkspindel angeordnete Elektromotoren zur Erzeugung von Drehmomenten sowohl zur Bewegung eines Lenkritzels einer Servolenkung als auch zur Simulation eines Lenkmoments im Lenkrad vorgesehen sind.
Die Nutzung der gleichen technischen Basis zur Energie- und Datenübertragung in das Lenkrad bei gleichzeitiger Erledigung der Lenkwinkelsensorfunktion ist bei dieser Einrichtung jedoch nicht vorgesehen und, wie insbesondere auch aus der entfernt vom Lenkrad gewählten Anordnung ersichtlich ist, auch nicht nahegelegt.

Ausgehend von dem dargelegten Stand der Technik liegt der Erfindung daher die Aufgabe zugrunde, eine Lenkeinrichtung für ein Kraftfahrzeug zu schaffen, bei der die Aufgaben Energie- und Datenübertragung zwischen Fahrzeug und Lenkrad, Lenkwinkelbestimmung und Drehmomenterzeugung in einer kompakten, durchweg induktive Prinzipien ausnutzenden Baueinheit gelöst sind. Eine solche Einheit soll bei sehr geringen Bauraumanforderungen mit möglichst wenigen Komponenten und somit besonders kostengünstig realisiert werden.

Diese Aufgabe wird dadurch gelöst, daß die Lenkeinrichtung auf einem einen drehfest mit dem Fahrzeug verbundenen Stator und einen drehfest mit dem Lenkrad verbundenen Rotor aufweisenden induktiven Modul basiert, das einen resolverbasierten Drehübertrager zur berührungslosen Übertragung von elektrischer Energie und Daten zwischen Fahrzeug und Lenkrad sowie zur Erfassung des Drehwinkels des Lenkrades und einen ringförmigen Drehfeldmotor zur Erzeugung von Drehmomenten zwischen Fahrzeug und Lenkrad umfaßt, wobei der Stator und der Rotor Spulen umfassen, die miteinander in der Weise kooperieren, daß eine induktive Kopplung der jeweils zur Realisierung der Drehübertragerfunktion und der Drehfeldmotorfunktion vorgesehenen Spulen auf der Statorseite mit den ihnen jeweils zugeordneten Spulen auf der Rotorseite gegeben ist.

Bei der erfindungsgemäßen Lenkeinrichtung ist vorteilhaft vorgesehen, daß zur Realisierung der Drehübertragerfunktion und der Drehfeldmotorfunktion zumindest jeweils drei auf einem Kreisumfang um die Drehachse des Lenkrades gleichbeabstandet angeordnete Spulen auf der Statorseite und auf der Rotorseite vorgesehen sind.

Zur Vermeidung von Überdeckungslücken zwischen rotor- und statorseitigen Spulen ist dabei insbesondere eine von der Anzahl und/oder Anordnung der Spulen auf der Statorseite unterschiedliche Anzahl und/oder Anordnung der diesen zugeordneten Spulen auf der Rotorseite vorgesehen.

Dabei ist bei einer Ausführungsform vorgesehen, daß die Spulen konzentrisch zueinander in einer senkrecht zur Lenkraddrehachse liegenden Ebene angeordnet sind, wogegen bei einer anderen Ausführungsform die Spulen in axial zueinander versetzten Ebenen angeordnet sind, wobei die Achsen der Spulen in beiden angesprochenen Ausführungen radial oder parallel zur Lenkraddrehachse ausgerichtet sein können.

Eine besonders effektive induktive Kopplung zwischen Stator und Rotor wird dadurch erreicht, daß diese im wesentlichen ringförmig ausgebildete Flußleitkörper umfassen, die im Bereich der Spulen eine E-förmigen radialen Querschnitt und im Bereich zwischen den Spulen einen U-förmigen radialen Querschnitt aufweisen, wobei die Flußleitkörper insbesondere aus einem mit einem weichmagnetischen Material gefüllten, thermoplastischen Kunststoff bestehen.

Die Realisierung der Flußleitkörper ist bevorzugt durch thermoplastisches Umspritzen der Spulen mit dem mit einem weichmagnetischen Material gefüllten Kunststoff vorgesehen.

Eine noch kompaktere Baueinheit, die durch die weitere Einsparung von Bauteilen auch besonders kostengünstig ist, läßt sich dadurch erreichen, daß zur Realisierung der Drehübertragerfunktion und der Drehfeldmotorfunktion auf der Statorseite die selben Spulen vorgesehen sind.

Einen weiteren Schritt in Richtung Bauraum- und Kosteneinsparung geht eine Ausführungsform, bei der zur Realisierung der Drehübertragerfunktion und der Drehfeldmotorfunktion auf der Statorseite und auf der Rotorseite die selben Spulen vorgesehen sind, wobei eine zeitlich versetzte Ansteuerung einzelner Spulen oder Spulengruppen des Stators und des Rotors vorgesehen ist.

Weiterhin ist vorgesehen, daß das Lenkrad durch eine Lenkspindel direkt mit einem die Stellung der Fahrzeugräder über ein Lenkgestänge beeinflussenden Lenkgetriebe verbunden ist, wobei die von dem Drehfeldmotor erzeugten Drehmomente zur Unterstützung der vom Fahrzeugführer aufgebrachten Lenkkräfte herangezogen sind, oder daß die mittels des Drehübertragers ermittelte Lenkradwinkelstellung zur Beeinflussung der Stellung der Fahrzeugräder durch elektromotorisch angetriebene Mitteln herangezogen ist, und die vom Drehfeldmotor erzeugten Drehmomente als Gegenlenkmomente zur Realisierung einer haptischen Rückmeldung für den Fahrzeugführer herangezogen sind.

Weitere Vorteile der Erfindung ergeben sich aus den übrigen Unteransprüchen sowie aus der nachfolgenden Beschreibung von Aufbau und Funktion der in der Zeichnung dargestellten Ausführungsbeispiele. Dabei zeigen:
- **Fig. 1**:: eine schematische Schnittdarstellung eines auf einer Drehachse montierten Lenkrades mit einem daran befestigten erfindungsgemäßen Modul
- **Fig. 2**:: einen Querschnitt durch einen stator- oder rotorseitigen Flußleitkörper (z.B. entlang A-A bzw. B-B in Fig. 1) mit einer gleichbeabstandeten Anordnung von
a) 4 Spulen
b) 6 Spulen
- **Fig. 3**:: eine schematische Schnittdarstellung eines auf einer Drehachse montierten Lenkrades mit einem daran befestigten erfindungsgemäßen Modul in einer Ausführungsform gemäß Anspruch 9, bei der die selben Statorspulen für die Übertrager- wie für die Motorfunktion vorgesehen sind

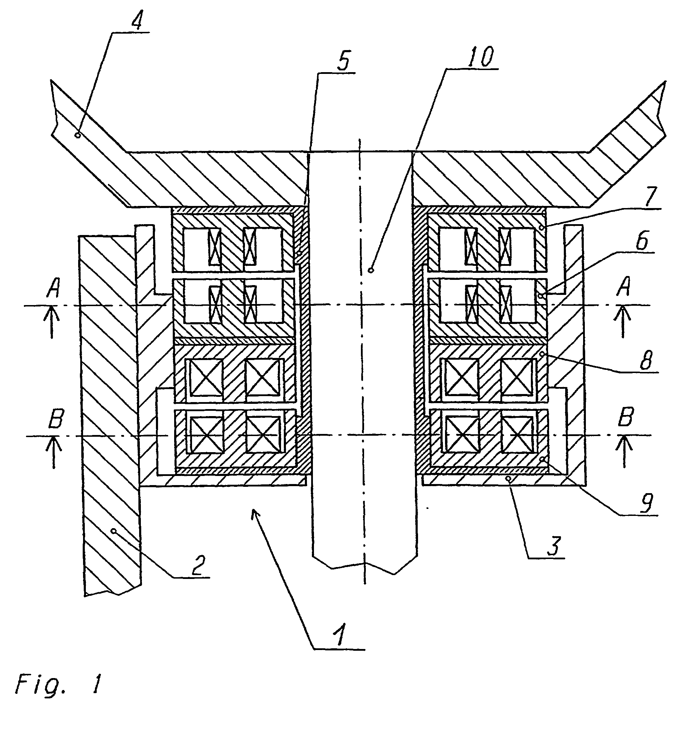

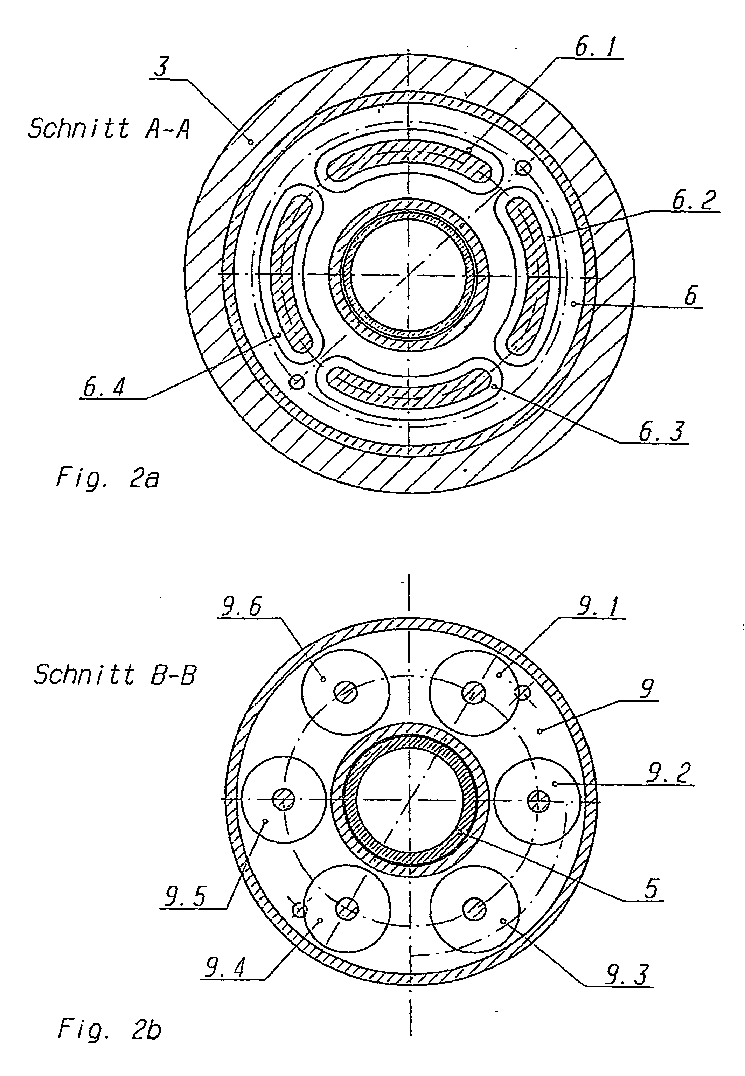

Wie aus Fig. 1 ersichtlich, umfaßt die erfindungsgemäße Lenkeinrichtung ein induktives Modul 1, welches als wesentliche Bestandteile einen drehfest mit dem Fahrzeug 2 verbundenen Stator 3 und einen drehfest mit dem Lenkrad 4 verbundenen Rotor 5 aufweist. Der Stator 3 sowie der Rotor 5 umfassen dabei ringförmige, konzentrisch zur Lenkraddrehachse angeordnete Flußleitkörper 6,7,8,9, die z.B. aus einem mit einem weichmagnetischen Material gefüllten thermoplastischen Kunststoff bestehen.
Der Flußleitkörper 6, der vier wie in Fig.2a zu sehen angeordnete, aus Kupferlackdraht gewickelte Spulen 6.1,...,6.4 trägt kooperiert mit dem ähnlich aufgebauten, aber sechs gleichbeabstandet auf dem Kreisumfang angeordnete Spulen 7.1 ,...,7.6 aufweisenden Flußleitkörper 7 zur Realisierung eines Drehübertragers zur berührungslosen Übertragung von elektrischer Energie und Daten zwischen Fahrzeug 2 und Lenkrad 4 sowie zur Erfassung des Drehwinkels des Lenkrades 4, wobei der Flußleitkörper 6 mit dem Stator 3 und der Flußleitkörper 7 mit dem Rotor 5 drehfest verbunden ist. Der Drehübertrager wird hier mit zwei um 90 ° gegeneinander verdrehten Primärspulen betrieben, die jeweils durch die elektrische Reihenschaltung der einander gegenüberliegenden Spulen 6.1 und 6.3 sowie 6.2 und 6.4 gebildet werden. Damit wird eine weitgehend rotationssymmetrische Anordnung für die Energie- und Datenübertragung erzielt.
Die Rotorseite des Drehübertragers ist ähnlich wie die Statorseite aber mit sechs Spulen 7.1,...,7.6 aufgebaut, von denen ebenfalls jeweils zwei gegenüberliegende zusammengeschaltet sind, wodurch drei um 60 ° gegeneinander verdrehte Sekundärspulen gebildet sind. Für die Winkeldetektion reicht prinzipiell die Auswertung der Spannung über einer der Sekundärspulen aus, zur Maximierung der Kopplung zwischen Primär- und Sekundärseite hinsichtlich der Energieübertragung und zur Vermeidung von Überdeckungslücken für die Winkeldetektion werden aber auch die anderen beiden Sekundärspulen benötigt.
Aufgrund der ohmschen Wicklungswiderstände und der Streuinduktivitäten des Drehübertragers tritt eine lastabhängige Phasenverschiebung zwischen Primärund Sekundärspannungen auf. Daher ist zwischen den sekundärseitigen Verbrauchern mit zeitlich unterschiedlichem Leistungsbedarf und der Sekundärseite des Übertragers ein Puffer vorzusehen, der den Übertrager stets mit einem konstanten Laststrom belastet, um eine störungsfreie Bestimmung des Lenkwinkels jederzeit gewährleisten zu können.

Die Flußleitkörper 8 und 9, die identisch aufgebaut sind und jeweils sechs aus Kupferlackdraht gewickelte Spulen 8.1,...,8.6 und 9.1,...,9.6 tragen, die wie in Fig.2b zu sehen angeordnet sind, kooperieren miteinander zur Realisierung eines Drehfeldmotors zur Erzeugung von Drehmomenten zwischen Fahrzeug 2 und Lenkrad 4, wobei der Flußleitkörper 8 mit dem Stator 3 und der Flußleitkörper 9 mit dem Rotor 5 drehfest verbunden ist. Ähnlich wie beim zuvor beschriebenen Drehübertrager werden auch hier durch die elektrische Reihenschaltung der einander gegenüberliegenden Spulen auf der Statorseite - in diesem Falle 8.1 und 8.4, 8.2 und 8.5 sowie 8.3 und 8.6 - die um 60° gegeneinander verdrehten Feldmagneten gebildet, die durch entsprechende Ansteuerung ein magnetisches Drehfeld erzeugen.
Dieses Drehfeld vermag auf einen magnetischen Anker, der z.B. im einfachsten Falle ein durch zwei gegenüberliegende Spulen 9.1 und 9.4 auf der Rotorseite gebildeter Dipol, oder aber eine unter Einbeziehung weiterer Rotorspulen gebildete komplexere magnetische Struktur sein kann, ein Drehmoment auszuüben.

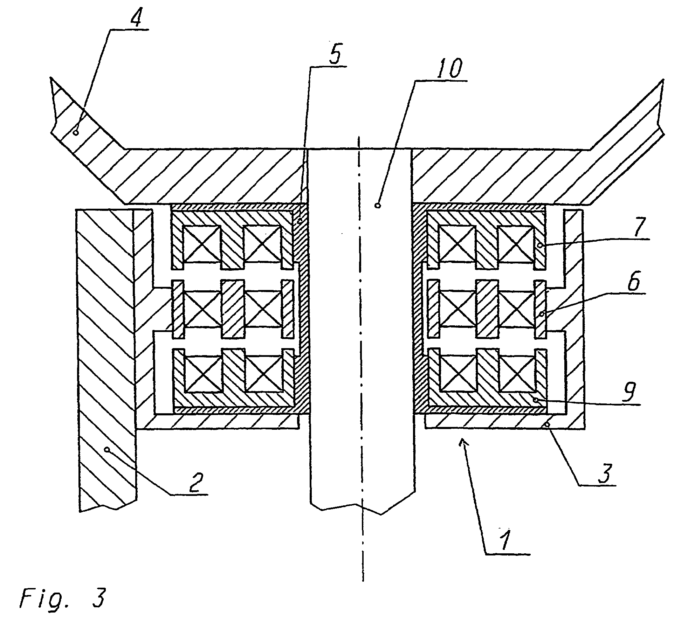

Durch die Möglichkeit, die Rotorspulen 9.1 bis 9.6 individuell anzusteuern, ist ein "dynamischer Anker" realisierbar, der auch in einem magnetischen Drehfeld mit konstanter Amplitude und Winkelgeschwindigkeit innerhalb gewisser Grenzen die Erzeugung beliebiger Drehmomentverläufe erlaubt.
Damit wird auch die in Fig. 3 schematisch dargestellte Ausführungsform mit nur einer Statorspulenanordnung 6, die sowohl die Rolle der Primärspulen für den Drehübertrager als auch die der Feldspulen für den Drehfeldmotor übernimmt, realisierbar, da eine Änderung von Amplitude oder Frequenz der Ansteuerung der Statorspulen, die für die Drehübertragerfunktion schädlich, für die Drehfeldmotorfunktion mit einem herkömmlichen "statischen" Anker aber unbedingt erforderlich wäre, hierbei nicht notwendig ist.

## Patentansprüche

1. Lenkeinrichtung für ein Kraftfahrzeug mit einem einen drehfest mit dem Fahrzeug (2) verbundenen Stator (3) und einen drehfest mit dem Lenkrad (4) verbundenen Rotor (5) aufweisenden induktiven Modul (1), umfassend einen resolverbasierten Drehübertrager zur berührungslosen Übertragung von elektrischer Energie und Daten zwischen Fahrzeug (2) und Lenkrad (4) sowie zur Erfassung des Drehwinkels des Lenkrades (4) und einen ringförmigen Drehfeldmotor zur Erzeugung von Drehmomenten zwischen Fahrzeug (2) und Lenkrad (4), wobei der Stator (3) und der Rotor (5) Spulen (6.1,..., 9.y') umfassen, die miteinander in der Weise kooperieren, daß eine induktive Kopplung der jeweils zur Realisierung der Drehübertragerfunktion und der Drehfeldmotorfunktion vorgesehenen Spulen (6.1,..., 6.x, 8.1,..., 8.y) auf der Statorseite (3) mit den ihnen jeweils zugeordneten Spulen (7.1,..., 7.x', 9.1,..., 9.y') auf der Rotorseite (5) gegeben ist.

2. Lenkeinrichtung nach Anspruch 1, **dadurch gekennzeichnet, daß** zur Realisierung der Drehübertragerfunktion und der Drehfeldmotorfunktion zumindest jeweils drei auf einem Kreisumfang um die Drehachse des Lenkrades (4) gleichbeabstandet angeordnete Spulen auf der Statorseite (3) und auf der Rotorseite (5) vorgesehen sind.

3. Lenkeinrichtung nach Anspruch 1 oder 2, **dadurch gekennzeichnet, daß** die zur Realisierung der Drehübertragerfunktion und der Drehfeldmotorfunktion vorgesehenen Spulen (6.1,..., 9.y') konzentrisch zueinander in einer senkrecht zur Lenkraddrehachse liegenden Ebene angeordnet sind.

4. Lenkeinrichtung nach Anspruch 1 oder 2, **dadurch gekennzeichnet, daß** die zur Realisierung der Drehübertragerfunktion und der Drehfeldmotorfunktion vorgesehenen Spulen (6.1,..., 9.y') in axial zueinander versetzten, senkrecht zur Lenkraddrehachse liegenden Ebenen angeordnet sind.

5. Lenkeinrichtung nach einem der Ansprüche 1 bis 4, **dadurch gekennzeichnet, daß** die Achsen der zur Realisierung der Drehübertragerfunktion und der Drehfeldmotorfunktion vorgesehenen Spulen (6.1 ,..., 9.y') radial zur Lenkraddrehachse ausgerichtet sind.

6. Lenkeinrichtung nach einem der Ansprüche 1 bis 4, **dadurch gekennzeichnet, daß** die Achsen der zur Realisierung der Drehübertragerfunktion und der Drehfeldmotorfunktion vorgesehenen Spulen (6.1,..., 9.y') parallel zur Lenkraddrehachse ausgerichtet sind.

7. Lenkeinrichtung nach einem der Ansprüche 1 bis 6, **dadurch gekennzeichnet, daß** die Anzahl und/oder Anordnung der Spulen (6.1,..., 6.x, 8.1,..., 8.y) auf der Statorseite (3) ungleich der Anzahl und/oder Anordnung der diesen zugeordneten Spulen (7.1,..., 7.x', 9.1,..., 9.y') auf der Rotorseite (5) ist.

8. Lenkeinrichtung nach einem der Ansprüche 1 bis 7, **dadurch gekennzeichnet, daß** der Stator (3) und der Rotor (5) im wesentlichen ringförmig ausgebildete Flußleitkörper (6, 7, 8, 9) umfassen, die im Bereich der Spulen eine E-förmigen radialen Querschnitt und im Bereich zwischen den Spulen einen U-förmigen radialen Querschnitt aufweisen.

9. Lenkeinrichtung nach Anspruch 8, **dadurch gekennzeichnet, daß** die Flußleitkörper (6, 7, 8, 9) aus einem mit einem weichmagnetischen Material gefüllten, thermoplastischen Kunststoff bestehen.

10. Lenkeinrichtung nach Anspruch 9, **dadurch gekennzeichnet, daß** die Flußleitkörper (6, 7, 8, 9) durch thermoplastisches Umspritzen der Spulen mit dem mit einem weichmagnetischen Material gefüllten Kunststoff realisiert sind.

11. Lenkeinrichtung nach einem der Ansprüche 1 bis 10, **dadurch gekennzeichnet, daß** auf der Statorseite (3) die selben Spulen (6.1,..., 6.x) zur Realisierung der Drehübertragerfunktion und der Drehfeldmotorfunktion vorgesehen sind.

12. Lenkeinrichtung nach einem der Ansprüche 1 bis 10, **dadurch gekennzeichnet,** auf der Statorseite (3) und auf der Rotorseite (5) die selben Spulen (6.1,..., 6.x, 7.1,..., 7.x') zur Realisierung der Drehübertragerfunktion und der Drehfeldmotorfunktion vorgesehen sind, wobei eine zeitlich versetzte Ansteuerung einzelner Spulen oder Spulengruppen des Stators (3) und des Rotors (5) vorgesehen ist.

13. Lenkeinrichtung nach einem der Ansprüche 1 bis 12, **dadurch gekennzeichnet, daß** das Lenkrad (4) durch eine Lenkspindel (10) direkt mit einem die Stellung der Fahrzeugräder über ein Lenkgestänge beeinflussenden Lenkgetriebe verbunden ist, wobei die von dem Drehfeldmotor erzeugten Drehmomente zur Unterstützung der vom Fahrzeugführer aufgebrachten Lenkkräfte herangezogen sind.

14. Lenkeinrichtung nach einem der Ansprüche 1 bis 12, **dadurch gekennzeichnet, daß** die die mittels des Drehübertragers ermittelte Lenkradwinkelstellung zur Beeinflussung der Stellung der Fahrzeugräder durch elektromotorisch angetriebene Mitteln herangezogen ist, und die vom Drehfeldmotor erzeugten Drehmomente als Gegenlenkmomente zur Realisierung einer haptischen Rückmeldung für den Fahrzeugführer herangezogen sind.

## Claims

1. Steering facility for a motor vehicle with an inductive module (1) featuring a stator (3) connected to the vehicle (2) in a torsion-resistant manner and a rotor (5) connected to the steering wheel (4) in a torsion-resistant manner, comprising a resolver-based torque transmitter for the non-contact transmission of electrical energy and data between the vehicle (2) and the steering wheel (4) as well as for detecting the angle of rotation of the steering wheel (4), and an annular torque motor for generating torques between the vehicle (2) and the steering wheel (4), with the stator (3) and the rotor (5) comprising coils (6.1,....,9.y') that cooperate with each other in such a way that there is an inductive coupling of the respective coils (6.1,....,6.x, 8.1,....8.y) provided for effecting the function of torque transmission and the function of the torque motor on the stator constituent (3) with the respectively assigned coils (7.1,....7.x', 9.1,....,9.y') on the rotor constituent (5).

2. Steering facility in accordance with Claim 1, **characterized by** the fact that at least three coils arranged in an equidistant manner on a circumference around the axis of rotation of the steering wheel (4) are provided on the stator constituent (3) and on the rotor constituent (5) respectively.

3. Steering facility in accordance with Claim 1 or Claim 2, **characterized by** the fact that the coils (6.1,....,9.y') provided for performing the function of torque transmitter and the function of torque motor are arranged concentrically to each other on a plane lying vertical to the axis of rotation of the steering wheel.

4. Steering facility in accordance with Claim 1 or Claim 2, **characterized by** the fact that the coils (6.1,...., 9.y') provided for performing the function of torque transmitter and the function of torque motor are arranged on planes that are axially offset from each other and vertical to the axis of rotation of the steering wheel.

5. Steering facility in accordance with any of Claims 1 to 4, **characterized by the fact** that the axes of the coils (6.1,...., 9.y') provided for performing the function of torque transmitter and the function of torque motor are aligned radially to the axis of rotation of the steering wheel.

6. Steering facility in accordance with any of Claims 1 to 4, **characterized by the fact** that the axes of the coils (6.1,...., 9.y') provided for performing the function of torque transmitter and the function of torque motor are aligned parallel to the axis of rotation of the steering wheel.

7. Steering facility in accordance with any of Claims 1 to 6, **characterized by** the fact that the number and/or arrangement of the coils (6.1,...6.x, 8.1,....8.y) on the stator constituent (3) is different from the number and/or arrangement of the coils (7.1,....,7.x', 9.1,....,9.y') assigned to the same on the rotor constituent (5).

8. Steering facility in accordance with any of Claims 1 to 7, **characterized by** the fact that the stator (3) and the rotor (5) essentially comprise flux conductor elements (6, 7, 8, 9) of an annular structure that show an E-shaped radial cross-section in the area of the coils and a U-shaped radial cross-section in the area between the coils.

9. Steering facility in accordance with Claim 8, **characterized by** the fact that the flux conductor elements (6, 7, 8, 9) consist of a thermoplastic filled with a magnetically soft material.

10. Steering facility in accordance with Claim 9, **characterized by** the fact that the flux conductor elements (6, 7, 8, 9) are realized by means of extrusion-coating the coils with the thermoplastic that is filled with a magnetically soft material.

11. Steering facility in accordance with any of Claims 1 to 10, **characterized by** the fact that the same coils (6.1,...., 6.x) are provided on the stator constituent (3) for performing the function of torque transmitter and the function of torque motor.

12. Steering facility in accordance with any of Claims 1 to 10, **characterized by the fact** that the same coils (6.1,...., 6.x, 7.1,...., 7.x') are provided on the stator constituent (3) and on the rotor constituent (5) for the purpose of performing the function of torque transmitter and the function of torque motor, with a temporarily displaced triggering of individual coils or groups of coils of the stator (3) and the rotor (5) being provided.

13. Steering facility in accordance with any of Claims 1 to 12, **characterized by** the fact that the steering wheel (4) is directly connected by means of a steering shaft (10) to a steering gear that influences the position of the wheels of the vehicle via a steering linkage, with the torques generated by the torque motor being brought into play for assisting the steering forces applied by the driver of the vehicle.

14. Steering facility in accordance with any of Claims 1 to 12, **characterized by** the fact that the angular position of the steering wheel determinated by means of the torque transmitter is brought into play for influencing the position of the wheels of the vehicle by electric motor-driven means and the torques generated by the torque motor are brought into play as steering counter-torques for effecting a haptic check-back signal for the driver of the vehicle.

## Revendications

1. Dispositif de direction pour un véhicule automobile, avec un module inductif (1) qui, présentant un stator (3) associé solidaire en rotation avec ledit véhicule (2), et un rotor (5) associé solidaire en rotation avec le volant (4), comprenant un transducteur de rotation à base d'un résolveur pour le transfert sans contact d'énergie électrique et de données entre le véhicule automobile (2) et le volant (4), ainsi que pour la détection de l'angle de rotation du volant (4), et un moteur à champ rotatif annulaire pour la génération de couples de rotation entre le véhicule automobile (2) et le volant (4), le stator (3) et le rotor (5) comprennent des bobines (6.1,..., 9.y') qui coopèrent les unes avec les autres de manière à donner un couplage inductif entre les bobines (6.1,..., 6x, 8.1,..., 8.y), prévues, côté stator (3), pour la réalisation de la fonction de transducteur de rotation, et les bobines (7.1,..., 7.x', 9.1,..., 9.y') côté rotor (5), qui leur sont respectivement associées.

2. Dispositif de direction selon la revendication 1, **caractérisé en ce que**, pour la réalisation de la fonction de transducteur de rotation et la fonction de moteur à champ rotatif, au moins trois bobines, disposée, à intervalles égaux, sur une circonférence autour de l'axe de rotation du volant (4) sont respectivement prévues côté stator (3) et côté rotor (5).

3. Dispositif de direction selon la revendication 1, **caractérisé en ce que** les bobines (6.1,..., 9.y'), prévues pour la réalisation de la fonction de transducteur de rotation et de la fonction de moteur à champ rotatif sont disposées concentriquement les uns par rapport aux autres, dans un plan perpendiculaire à l'axe de rotation du volant.

4. Dispositif de direction selon la revendication 1 ou 2, **caractérisé en ce que** les bobines (6.1,..., 9.y'), prévues pour la réalisation de la fonction de transducteur de rotation et la fonction de moteur à champ rotatif, sont disposées dans des plans perpendiculaires à l'axe de rotation du volant, décalés dans le sens axial les uns par rapport aux autres.

5. Dispositif de direction selon l'une des revendications 1 à 4, **caractérisé en ce que** les axes des bobines (6.1,..., 9.y'), prévues pour la réalisation de la fonction de transducteur de rotation et de la fonction de moteur à champ rotatif sont orientés dans le sens radial par rapport à l'axe de rotation du volant.

6. Dispositif de direction selon l'une des revendications 1 à 4, **caractérisé en ce que** les axes des bobines (6.1,..., 9.y'), prévues pour la réalisation de la fonction de transducteur de rotation et de la fonction du moteur à champ rotatif sont orientés parallèlement à l'axe de rotation du volant.

7. Dispositif de direction selon l'une des revendications 1 à 4, **caractérisé en ce que** le nombre et / ou la disposition des bobines (6.1,...6.x, 8.1,..., 8.y) côté stator (3) ne sont pas les mêmes que le nombre et / ou la disposition des bobines (7.1,..., 7.x', 9.1,..., 9y') côté rotor (5) qui sont associées à celles-ci.

8. Dispositif de direction selon l'une des revendications 1 à 7, **caractérisé en ce que** le stator (3) et le rotor (5) comprennent des corps conducteurs de flux (6, 7, 8, 9) conçus sensiblement en forme d'anneaux, qui, dans le secteur des bobines, présentent une coupe transversale radiale en forme de E et, dans le secteur situé entre les bobines, une coupe transversale radiale en forme de U.

9. Dispositif de direction selon la revendication 8, **caractérisé en ce que** les corps conducteurs de flux (6, 7, 8, 9) consistent en une matière thermoplastique, chargée d'un matériau magnétique doux.

10. Dispositif de direction selon la revendication 9, **caractérisé en ce que** les corps conducteurs de flux (6, 7, 8, 9) sont réalisés par enrobage thermoplastique des bobines avec une matière plastique chargée d'un matériau magnétique doux.

11. Dispositif de direction selon l'une des revendications 1 à 10, **caractérisé en ce que**, du côté stator (3), les mêmes bobines (6.1,..., 6.x) sont prévues pour la réalisation de la fonction de transducteur de rotation et de la fonction de moteur à champ rotatif.

12. Dispositif de direction selon l'une des revendications 1 à 10, **caractérisé en ce que**, du côté stator (3) et du côté rotor (5), les mêmes bobines (6.1,..., 6.x, 7.1,..., 7.x') sont prévues pour la réalisation de la fonction de transducteur de rotation et la fonction de moteur à champ rotatif, une excitation des bobines ou des groupes de bobines individuels décalée dans le temps étant prévue.

13. Dispositif de direction selon l'une des revendications 1 à 10, **caractérisé en ce que** le volant (4) est relié, par un arbre de direction (10), directement à un mécanisme de direction qui influence la position des roues du véhicule par l'intermédiaire d'une timonerie de direction, les couples de rotation, générés par le moteur à champ rotatif étant mis à contribution pour renforcer les forces de braquage appliquées par le conducteur du véhicule.

14. Dispositif de direction selon l'une des revendications 1 à 10, **caractérisé en ce que** la position angulaire du volant déterminée au moyen du transducteur de rotation pour influencer la position des roues du véhicules est mise à contribution par des auxiliaires électromoteurs, et que les couples, générés par le moteur à champ rotatif en tant que couples antagonistes au braquage, pour réaliser une réponse haptique destinée au conducteur du véhicule sont mis à contribution.
